# EUROPEAN PATENT SPECIFICATION

(11) **EP 2 305 515 B1**
(45) Date of publication and mention of the grant of the patent: **29.02.2012**
(21) Application number: 09171880.9
(22) Date of filing: 30.09.2009
(51) Int. Cl.: B60R 1/076, B60R 1/074, B60R 1/06

(54) **Housing element for a rear view mirror**
Gehäuseelement für einen Rückspiegel
Élément de boîtier pour rétroviseur

(43) Date of publication of application: 06.04.2011
(73) Proprietor: SMR Patents S.à.r.l., 1653 Luxembourg (LU)
(72) Inventor: Müller, Dirk, 70569, Stuttgart (DE)
(74) Representative: Weber-Bruls, Dorothée

(56) References cited:
- EP-A2- 0 400 815
- JP-A- 59 120 540
- US-A- 4 712 891
- US-B1- 7 354 165

## Description

### Background of the invention

The invention discloses a solution for a rear view mirror with cover elements. The inventional rear view mirror has cover elements that allows other cover elements to move and has a built in flexibility to allow the mirror to fold away from driving position.

### State of the Art

Rear view mirror for vehicles are designed with two main parts: the mirror base and the mirror head. These two main parts of a rear view mirror assembly are covered with plastic elements for a nice appearance and a reduction of turbulent air flow. In addition the cover elements smooth the rigid edges of the functional parts and reduce the risk for persons colliding with a rear view mirror.
It is also known to combine the functional elements of a rear view mirror with the covers as in molding mirror bases in plastic so that they appear with a smooth surface.

For security reasons rear view mirrors pass a security test according ECE regulations for example. In these tests the impact of a pedestrian's head is simulated and the rear view mirror must hinge away with a dedicated force in traveling direction and against traveling direction of vehicle. Rear view mirrors that have a pivot axis that lays not in the plane of mirror head and mirror base cover joints. When the rear view mirror assembly is folded the cover elements move out of the pivot center and can block the movement. For this type of rear view mirror the security parameters will not be fulfilled and the rear view mirror would not be legally approved.

The problem of a mirror to be hinged away is described in US 6340231 wherein an electrical actuator is used and has features to easily fold away for security reasons. US 6361178 disclosed a rear view mirror attached to a bearing arm and a holding rod which pivot about the swivel axis in a plane extending in a direction substantially parallel to a direction of travel of the vehicle. The housings in the prior art are not blocking the pivot motion.
US 4712891 A discloses a generic solution where the rear view mirror is moulded in an undercut moulding process that combines a rigid material and a soft material. The core of the housing is made of a rigid material while the surface is made of a soft material. Both mirror head and mirror base have a part that is rigid and a surface part of an elastic material. If the mirror is folded versus the vehicle contour, the two main parts of the mirrors pivot around an axis. The two parts of the mirror housing come into abutment. The forces when the components are in abutment compress the elastic parts of the mirror.

### Summary of the invention

The invention is shown in the figures and shortly described there after. The inventional solution is useful in designs wherein the housing parts of the rear view mirror could block the pivot motion or could break after an impact folding away the mirror. This would increase the risk to injure somebody and the invention gives a way to have a design with a smooth surface of a rear view mirror and the security aspect that the mirror is folded away without destroying parts.

The invention provides at least one part of the mirror housings or covers that has a designed- in- flexibility to move versus other cover parts and to move back to the working position without distortions.
Figure 1 shows a rear view mirror
Figure 2 a cross section of a rear view mirror
Fig.3 show a design with housing elements
Fig.4 show the design to provide flexibility
Fig. 5 shows details of the design
Fig. 6 shows the fold away positions of a mirror
Fig. 7 shows the housing elements in a fold back position.
Fig. 8 shows schematically a pivot axis for different designs.
Fig. 9 shows a mirror base allowing additional range of movement

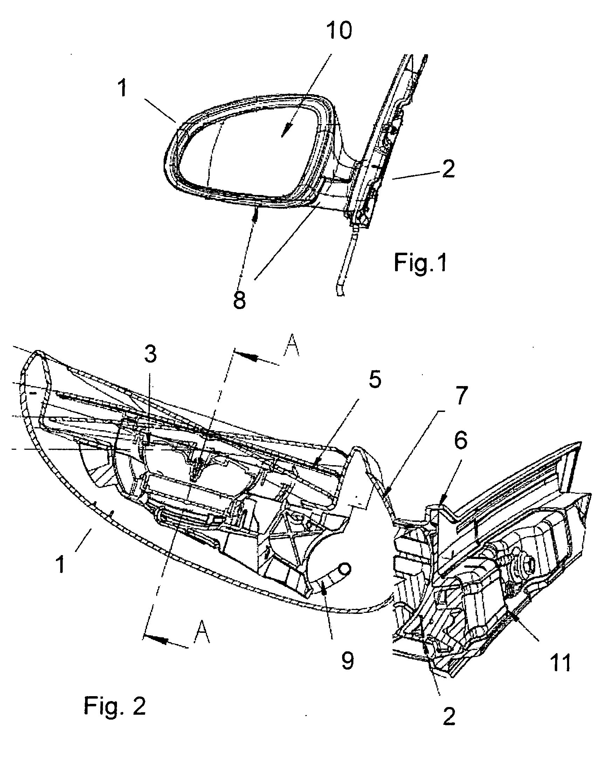

Figure 1 shows a rear view mirror assembly as it is attached to a vehicle at the left side. A mirror base 2 is connected to a mirror head 1. The mirror head comprises a reflective element 10 for the rear view. The mirror head has an upper housing part 7 and a lower housing part that covers the technical elements of the mirror head.

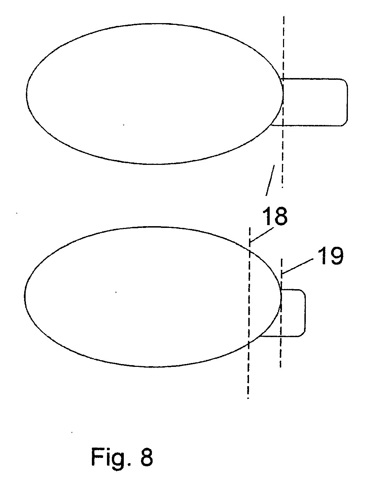

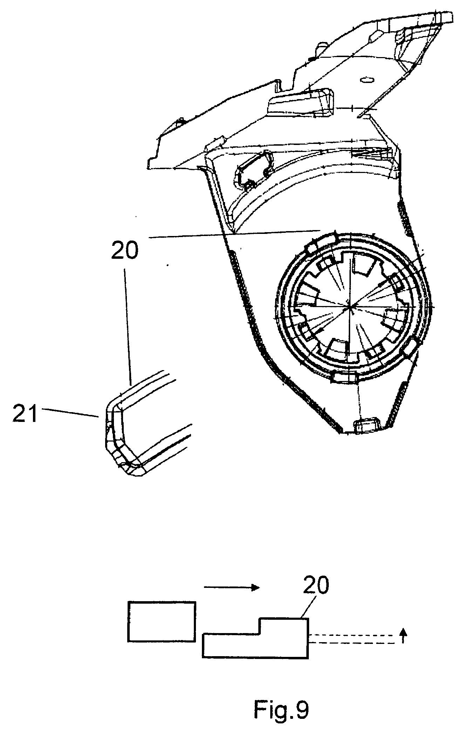

Figure 8 discloses the problem with a pivot axis that does not fall into the plane of joint 19 between mirror base cover and mirror head cover. If the mirror head is folded in traveling direction of the vehicle the mirror head in this figure is moving out of the paper plane. In the upper scheme the cover of mirror head can pivot versus the base without problems. In the scheme below the mirror head cover distal end moves out of the paper plane and the end closer to the vehicle in the paper lane. The mirror head cover is blocked by mirror base cover. The pivot movement is blocked in rear view mirror examples that are designed to use a power fold actuator that works without lift of mirror head versus mirror base. If the mirror is hinged a movement only around an axis is realized. The design of mirror base and mirror head for the manual version is according the power fold versions.
To avoid the blocking of mirror head the end stop design is also adapted to allow the mirror head to move over the end stop in the folding mechanism. For this purpose the end stop elements in the manual folding design has a structure with a first step for the normal fold back stop end and a second step for the final end stop before the mirror crashed at the vehicle's body. The two step solution of stop end cam 20 is schematically shown in Fig. 9. The first step can be overridden by an impact as it is applied in the pendulum impact test. The overlap of the cams is only around 1 mm, so that an impact can move the blocking cam up, see arrow, and allow the pivotable means to slide over the surface of the cam. The additional distance is marked with an arrow too.
The power fold version as seen in fig. 9 too has a stop end cam 20 with a phased face 21. The normal face is the first level of the stop end movement. With the impact the counter cam slides along the phased face and allows the additional movement. The phased face 21 allows the mirror to move the additional circle segment after blocking of cover is solved.

In figure 2 the rear view mirror assembly is shown in more details. The mirror head 1 is shown in a across section along the long axis. The upper hosing part 7 covers a glass actuator 3 that supports a glass support 5. The upper housing part 7 ends at the mirror base cover 6 that protects the mirror base 2. The mirror base has a sealing in direction to the vehicle.
A harness 9 connects the electrical devices with the vehicle board system.

In another embodiment the mirror base is molded as one part in plastic and the mirror base cover is not necessary. In this application the mirror base cover includes a solution with a full plastic mirror base comprising the cover surface too.

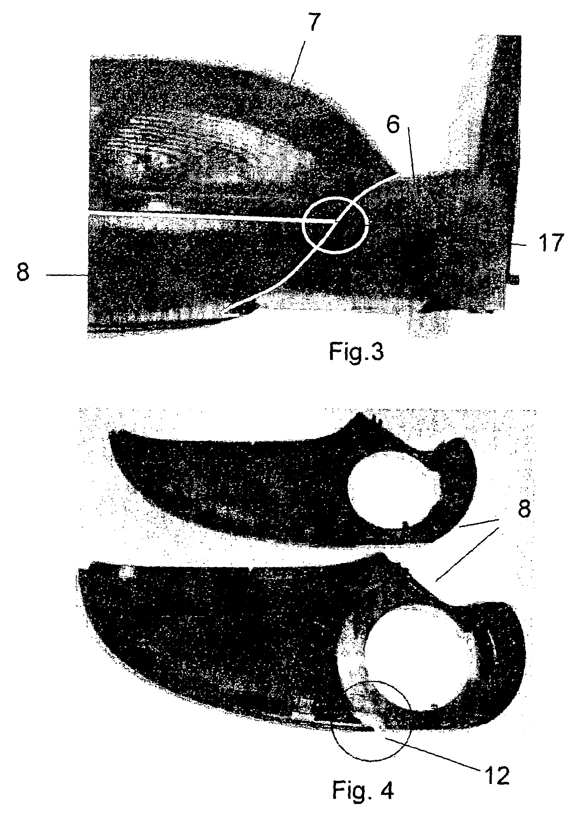

Figure 3 shows an example of housings for a rear view mirror assembly, In this embodiment an upper housing part 7, a lower housing part 8 and a mirror base cover covers the technical elements of the mirror. A critical joint 17 is highlighted with a circle. At this point the three parts of housing are joined together. In the working position of the rear view mirror assembly as it is shown in figure 3 the housing parts join without a gap between the parts.
Fig. 4 shows a top view of the lower housing part 8 with the circle opening for the pivot axis of the mirror base. The upper version is a standard design, the design below in the figure shows the inventional solution to provide a flexible element for the lower housing part.

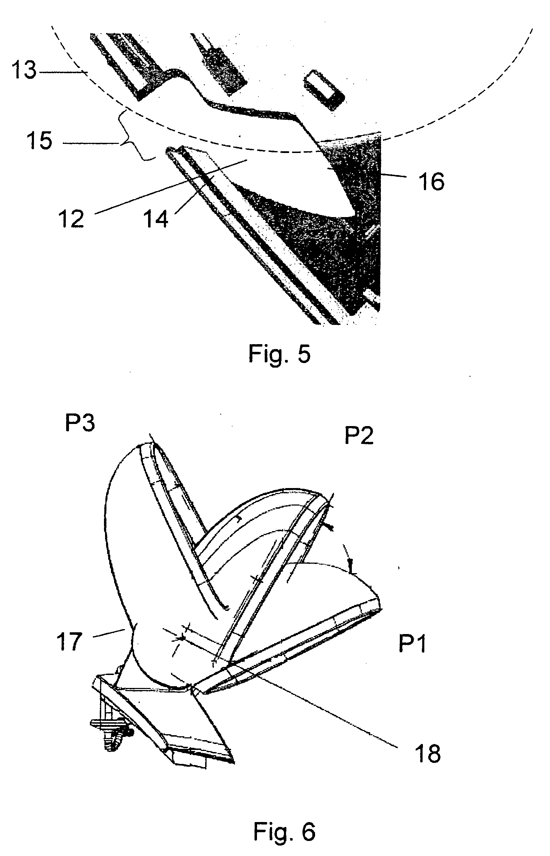

The detail of the solution is visible in figure 5. The lower housing part 8 has a clearance 12 in which another part of the housing can fit in if the mirror head is folded. The clearance 12 follows a circle path that is parallel to the opening for the pivot axis. The clearance has a direction along the circle motion of the mirror head versus the mirror base. The clearance 12 has a first opening width 12 and a second opening width 16. The opening width increases from the first to the second opening width. The clearance forms a small bar 14 at the inner end of the lower housing part 8. The whole housing is formed in a flexible material, a plastic as ABS for example. The material must have enough flexibility, so that the small bar can move slightly without breakage.

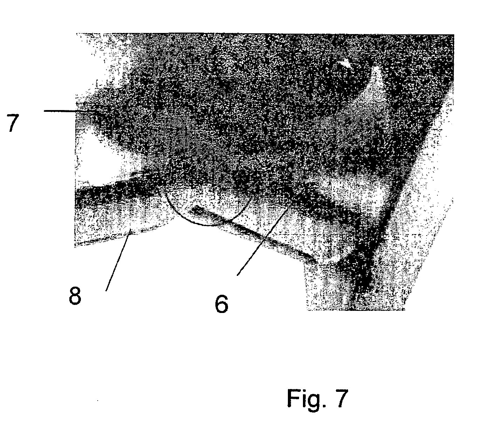

Figure 6 shows the rear view mirror assembly in three positions. In the position P2 the mirror is installed in working position at the vehicle. The positions P1 shows the fold in version which is used if a power fold actuator folds in the mirror in a parking position. The same position is achieved in the pendulum impact test with an impact on the housing from the front of the mirror. Position P3 is the position that is realized after an impact from the rear side of the mirror. This is the critical position.
The housing part have to move against each others with the result that they cant. Figure 7 shows the solution of the invention. The lower housing part 8 undercuts under the mirror base cover 6. The mirror base cover edge links into the clearance of the lower housing part 12 and move along the circle 13. The small bar 14 is spread away and a gap occurs between the housing parts.

The rear view mirror assembly doe not cant and move without distortion to the fold away position that is necessary for security reasons. The rear view mirror assembly is not disturbed, no parts of the mirror housing are breaking away resulting in sharp edges.
After impact the mirror head can be moved back into working position and the flexible bar 14 snaps back into the unstressed conditions.

### Legend

- 1: Support
- 2: Mirror Base
- 3: Glass Actuator
- 4: Power fold actuator
- 5: Glass support
- 6: Mirror base cover
- 7: Housing Upper part
- 8: Housing lower part
- 9: Harness
- 10: Reflective Element
- 11: Sealing
- 12: Clearance
- 13: Circle
- 14: Bar
- 15: First opening width
- 16: Second opening width
- 17: Joint
- 18: pivot axis
- 19: joint plane head and base
- 20: stop end cam
- 21: phased face

## Claims

1. A rear view mirror assembly with a mirror head (2) and a mirror base (1), at least two mirror housing parts covering the elements of the rear view mirror assembly, wherein the mirror head (2) is pivotable mounted to the mirror base (1) with pivot axis (18), whereby at least one part of the mirror housing parts (6,7,8) that cover the rear view mirror assembly has a clearance (12) so that the at least two parts can undercut each others in case of the rear view mirror folding out of the working position (P2) in the folded position (P3),
**characterized in that**
the clearance (12) follows a circle path parallel to an opening of the pivot axis (18).

2. A rear view mirror assembly according claim 1 **characterized in that** the circle (13) is along the circle of the pivot motion of mirror head versus mirror base.

3. A rear view mirror assembly according claim 1 **characterized in that** the clearance (12) has a first opening width (15) and a second opening width (16) and the width is increasing from the first to the second opening width.

4. A rear view mirror assembly according claim 1 **characterized in that** the clearance (12) forms a bar (14) in the at least one housing part.

5. A rear view mirror assembly according claim 4 **characterized in that** the bar (14) is flexible and can be moved outside the shape of the housing part.

6. A rear view mirror assembly according claim 1 **characterized in that** the pivot movement is allowed by stop end cam (20) design in the conjunction between mirror head and mirror base.

7. A rear view mirror assembly according claim 6 **characterized in that** the stop end cam (20) has a first level to stop normal fold back movement and a mean (21) to override the first stop end level to achieve additional movement.

## Patentansprüche

1. Rückspiegelanordnung mit einem Spiegelkopf (2) und einem Spiegelsockel (1), mindestens zwei Spiegelgehäuseteilen, die die Elemente der Rückspiegelanordnung abdecken, wobei der Spiegelkopf (2) schwenkbar am Spiegelsockel (1) mit einer Schwenkachse (18) montiert ist, wobei mindestens ein Teil der Spiegelgehäuseteile (6, 7, 8), die die Rückspiegelanordnung abdecken, eine Aussparung (12) aufweist, so dass sich die mindestens zwei Teile im Falle des Ausklappens des Rückspiegels aus der Arbeitsposition (P2) in die Klappposition (P3) unterschneiden können, **dadurch gekennzeichnet, dass**
die Aussparung(12) einer Kreisbahn folgt, die parallel zu einer Öffnung der Schwenkachse (18) verläuft.

2. Rückspiegelanordnung nach Anspruch 1, **dadurch gekennzeichnet, dass** der Kreis (13) entlang des Kreises der Schwenkbewegung von Spiegelkopf gegen Spiegelsockel verläuft.

3. Rückspiegelanordnung nach Anspruch 1, **dadurch gekennzeichnet, dass** die Aussparung (12) eine erste Öffnungsbreite (15) und eine zweite Öffnungsbreite (16) aufweist und die Breite von der ersten zur zweiten Öffnungsbreite hin zunimmt.

4. Rückspiegelanordnung nach Anspruch 1, **dadurch gekennzeichnet, dass** die Aussparung (12) in dem mindestens einen Gehäuseteil eine Leiste (14) bildet.

5. Rückspiegelanordnung nach Anspruch 4, **dadurch gekennzeichnet, dass** die Leiste (14) flexibel ist und aus der Form des Gehäuseteils heraus bewegbar ist.

6. Rückspiegelanordnung nach Anspruch 1, **dadurch gekennzeichnet, dass** die Schwenkbewegung in der Verbindung zwischen Spiegelkopf und Spiegelsockel durch Gestaltung mit Anschlagnocken (20) ermöglicht wird.

7. Rückspiegelanordnung nach Anspruch 6, **dadurch gekennzeichnet, dass** der Anschlagnocken (20) eine erste Stufe zum Stoppen der normalen Umklappbewegung und ein Mittel (21) zur Überwindung der ersten Anschlagstufe zum Erreichen einer zusätzlichen Bewegung aufweist.

## Revendications

1. Ensemble formant rétroviseur muni d'une tête de rétroviseur (2) et d'une base de rétroviseur (1), au moins deux parties de boîtier de rétroviseur recouvrant les éléments de l'ensemble formant rétroviseur, dans lequel la tête de rétroviseur (2) est montée de manière pivotante sur la base de rétroviseur (1) avec un axe de pivotement (18), de telle sorte qu'au moins une partie des parties de boîtier de rétroviseur (6, 7, 8) qui recouvrent l'ensemble formant rétroviseur a un jeu (12) tel que les au moins deux parties peuvent se séparer dans le cas où le rétroviseur arrière est plié de la position active (P2) jusque dans la position pliée (P3),
**caractérisé en ce que**
le jeu (12) suit un trajet en cercle parallèle à l'ouverture de l'axe de pivotement (18).

2. Ensemble formant rétroviseur selon la revendication 1, **caractérisé en ce que** le cercle (13) est le long du cercle du mouvement de pivotement de la tête de rétroviseur par rapport à la base de rétroviseur.

3. Ensemble formant rétroviseur selon la revendication 1, **caractérisé en ce que** le jeu (12) a une première largeur d'ouverture (15) et une seconde largeur d'ouverture (16), et la largeur augmente de la première largeur d'ouverture vers la seconde largeur d'ouverture.

4. Ensemble formant rétroviseur selon la revendication 1, **caractérisé en ce que** le jeu (12) forme une barre (14) dans la au moins une partie de boîtier.

5. Ensemble formant rétroviseur selon la revendication 4, **caractérisé en ce que** la barre (14) est souple, et peut être déplacée à l'extérieur de la forme de la partie de boîtier.

6. Ensemble formant rétroviseur selon la revendication 1, **caractérisé en ce que** le déplacement de pivotement est autorisé par une came d'extrémité de butée (20) conçu à la liaison entre la tête de rétroviseur et la base de rétroviseur.

7. Ensemble formant rétroviseur selon la revendication 6, **caractérisé en ce que** la came d'extrémité du butée (20) a un premier niveau pour stopper un déplacement de pliage vers l'arrière normal, et des moyens (21) pour surmonter le premier niveau d'extrémité de butée afin d'obtenir un mouvement supplémentaire.
